# EUROPEAN PATENT SPECIFICATION

(11) **EP 1 797 853 B1**
(45) Date of publication and mention of the grant of the patent: **03.03.2010**
(21) Application number: 06026035.3
(22) Date of filing: 15.12.2006
(51) Int. Cl.: A61G 5/10

(54) **A wheelchair**
Rollstuhl
Fauteuil roulant

(30) Priority: 16.12.2005 EP 05388108
(43) Date of publication of application: 20.06.2007
(73) Proprietor: INVACARE INTERNATIONAL S.A.R.L., 1196 Gland (CH)
(72) Inventor: Feldt, Mats, 343 73 Virestad (SE); Alahannu, Keijo, 285 33 Markaryd (SE)
(74) Representative: Nielsen, Henrik Sten

(56) References cited:
- EP-A- 0 827 729
- EP-A- 1 034 766
- WO-A-2004/006820
- GB-A- 2 238 275
- US-A- 4 358 125
- US-A- 4 560 033
- US-A- 6 102 166
- US-B1- 6 264 218

## Description

This invention relates to a wheelchair and to the individual parts of a wheelchair in particular the wheel brackets.

Numerous wheelchairs with various parts have been developed in the past. Among the references disclosing wheelchairs and their parts, reference is made to US Patent No. 4,132,228, US Patent No. 4,852,899, US Patent No. 5,131,672, US Patent No. 5,492,355, US Patent No. 5,851,018, US Patent No. 5,884,928, US Patent No. 6,139,037, US Patent No. 6,186,594, US Patent No. 6,189,906, US Patent No. 6,331,036, US Patent No. 6,467,785, US Patent No. 6,607,250, and US Patent Application Publications No. 2001/0008335, No. 2002/0109399, No. 2002/0125678, No. 2005/0022296 and No. 2005/0257966, which are further hereby incorporated in the present specification by reference.

Moreover, the references WO 99/19198, WO 02/36061, WO 2005/109195, JP 10000219 , DE 102 34 039and EP 1 034 766 also disclose wheelchairs and their parts.

Wheelchairs are used for many purposes, e.g. for a person who by his own is not able to walk or for a person who is undergoing training for a certain period and is immobilised, e.g. after a car accident or after surgery. Accordingly the person needs transportation by means of the wheelchair.

Moreover, wheelchair users often suffer from pains or from a permanent sickness or illness or injuries that prevent them from standing and from walking as well. People who have a severe handicap unfortunately have to stay much of their awakened time sitting in a wheelchair.

Thus many people are bound to the wheelchair for many hours every day and in many instances for long periods during their entire life.

Wheelchairs are provided as a loan from a hospital to the patients needing them during a limited period e.g. only during their stay and for a few weeks thereafter.

Furthermore, it has become a part of the inventory of airports and amusement parks that wheelchairs are bought and stocked to be available as a service for customers asking for them or having a sudden need therefor.

However, in principle a wheelchair is to be used by many people. Some people only have a short "stay" but many people are required to use them for longer periods. The population of users differs from a small three-year-old child to a teenager to a young person to grown-up persons and very old people as well. This population is very diversified: they differ in age, in size, in weight, in height and in use of the chair, and accordingly such population of individuals have various requirements: i.e. how to use the wheelchair i.e. which body part(s) is/are to be supported, on which surface the wheelchair is used and for what purpose (on the job, in school, at home, inside a wagon, in which environment, etc), and it is required that the wheelchair is foldable, etc. Other standard wheelchairs are sold to individuals for their personal use.

In all cases people using these wheelchairs have different requirements as to how the wheelchairs' overall comfort is obtained, its weight, size and how it is to be handled and applied. Thus individuals have varying requirements to weight, size and handling of the wheelchair, and in particular requirements to the seat, the backrest, position of the wheels and to the surface on which the wheelchair can be used. Individuals also have varying requirements to adjustment and customisation of these parts to get comfort when seated in the wheelchair. When the requirements are fulfilled there is a great likelihood that the body-parts of the individual are well supported when the individual is seated in the wheelchair and that the wheelchair also can be used to move the person around.

It is an object of the present invention to provide a wheelchair so that the wheelchair provides comfort to a user regardless of the size of the user, the weight and ergonomical needs of the user.

It is an object of the present invention to provide a wheelchair with the possibility to angle the two wheels to get user advantages like stability and to improve the turning stability of the wheelchair.

The above object, the above advantage, and the above feature together with numerous other objects, advantages, and features which will be evident from the below detailed description of the present invention and are in accordance with the teaching of the present invention as claimed obtained by the following aspect of the invention:
A wheelchair wheel bracket comprising a first part to be fixated to the frame of the wheelchair, the first part defining a first set of opposite first and second contact surfaces, the first part being repositionable relative to the frame for allowing the first contact surface, or alternatively, the second contact surface to face outwardly relatively to the frame defining a fixation surface,
a second part supporting the wheel shaft of one of the wheels, the second part defining a second set of opposite third and fourth contact surfaces for allowing the third contact surface, or alternatively, the fourth contact surface to be contacted with and fixated relative to the fixation surface,
at least one of the first and second sets of opposite contact surfaces defining a non parallel set of contact surfaces and at least one combination of contacting one of the surfaces of the second set with one of the surfaces of the first set providing a non cambered position of the wheel, and a different combination of contacting one of the surfaces of the second set with one of the surfaces of the first set providing a positive cambered position of the wheel.

The wheel brackets first part constituting a wheel bracket body having two pairs of shells for mounting the wheel bracket to a pair of support tubes, and the second part constituting a sleeve mounted to the wheel bracket body, the sleeve having a bracket for mounting and supporting the wheel shaft of a respective wheel of the wheelchair.

The wheel brackets wheel bracket body comprising a longitudinal ridge for co-operative engagement with a complementary longitudinal ridge of the sleeve.

The wheelchair according to any of the preceding aspects comprising a collapsible and foldable frame, a pair of wheels and a pair of bracing wheels the wheels mounted to the frame allowing the standing and movement of the wheelchair, and a seat and a backrest into which an individual using the wheelchair is positioned, the seat and backrest being fixated to the frame.

A wheelchair according to the above aspect, the wheelchair comprising a collapsible and foldable frame, a pair of wheels and a pair of bracing wheels, the wheels mounted to the frame allowing the standing and movement of the wheelchair, and the seat and a backrest into which an individual using the wheelchair is positioned, the seat and backrest being fixated to the frame.

The invention will be explained in more detail below in connection with the preferred embodiments and with reference to the drawings, in which:
fig. 1 is an overview of an embodiment of the wheelchair,
fig. 2 is a side view of the frame components of the wheelchair,
fig. 3 is a view of a part of the wheelchair frame with a wheel,
fig. 4a shows the wheel of the wheelchair positioned perpendicular to a surface,
fig. 4b shows the wheel of the wheelchair in a positive camber,
fig. 5a is an embodiment of a wheel bracket, according to the invention,
fig. 5b is an embodiment of a wheel bracket, according to the invention,
fig. 5c is an embodiment of a wheel bracket, according to the invention,
fig. 6 shows an embodiment of the braking arrangement of the wheelchair,
fig. 7 shows an embodiment of the braking arrangement of the wheelchair,
fig. 8 shows an embodiment of a gadget bracket for the wheelchair,
fig. 9 shows an embodiment of a gadget bracket for the wheelchair,
fig. 10 is an embodiment of the back rest arrangement of the wheelchair,
fig. 11 is an embodiment of the seat arrangement of the wheelchair,

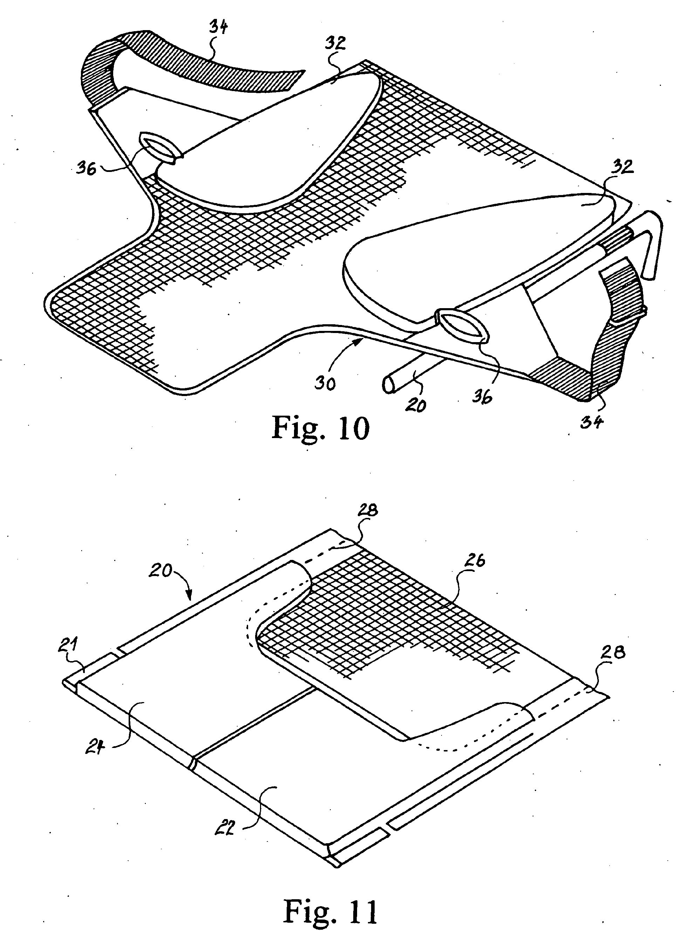

fig. 11 a and 11 b show how the body is seated,

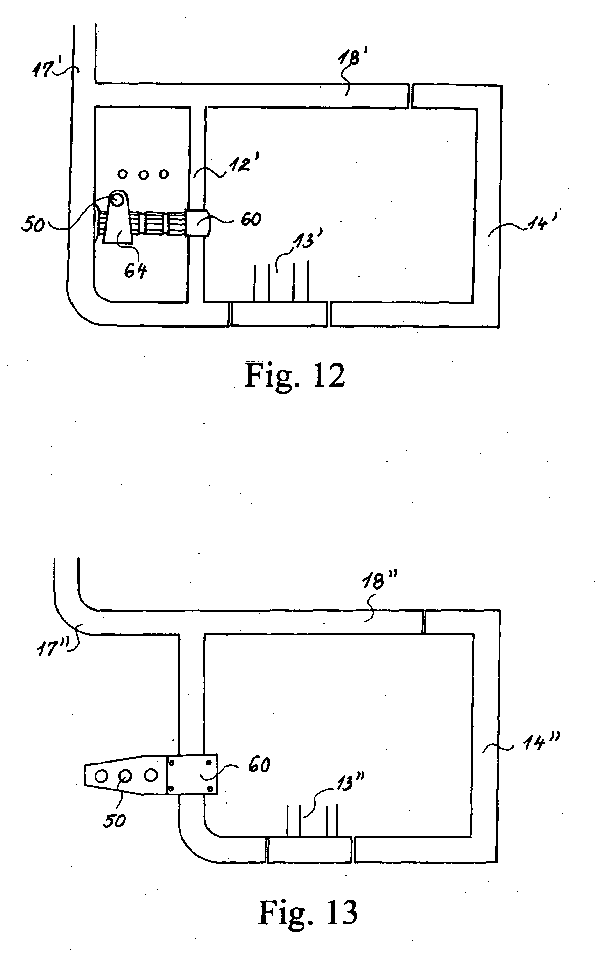

fig. 12 shows an embodiment of the frame arrangement of the wheelchair,
fig. 13 shows an embodiment of the frame arrangement of the wheelchair,

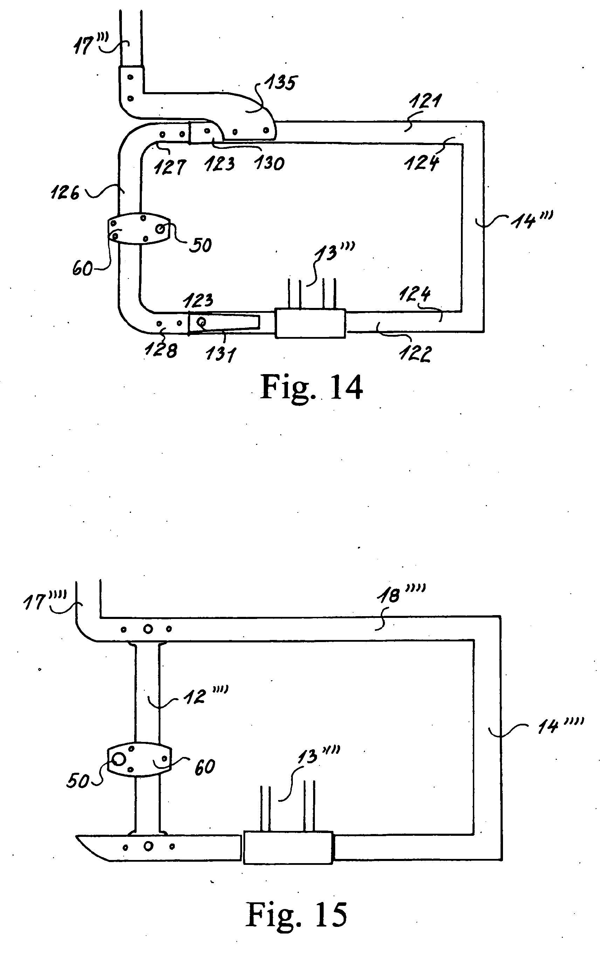

fig. 14 shows an embodiment of the frame arrangement of the wheelchair, in particular the side part of the wheel chair for supporting the drive wheel of the wheel chair, and
fig. 15 shows an embodiment of the frame arrangement of the wheelchair.

Throughout the drawings, the same reference numerals indicate identical elements or components. In the present specification, components or elements identical to components or elements, respectively, described previously with reference to a preceding figure are designated the same reference numerals and components or elements differing from previously described components or elements, respectively, however serving the same overall purpose, are designated the same integer as the previously described component or element, however, added a marking for identifying the structural difference from the previously described component or element.

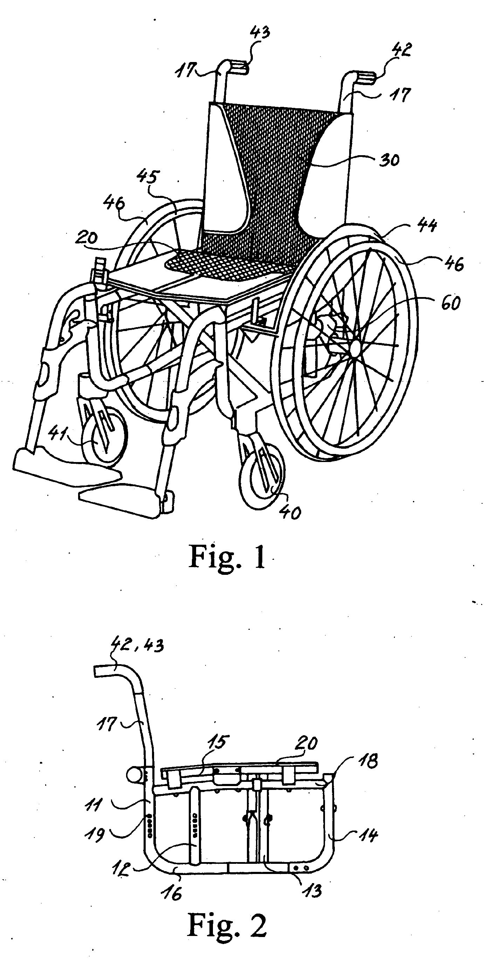

Fig. 1 is an overview of an embodiment of the wheelchair. The wheelchair 10 basically supports the patient or person when transported or just placed in the chair. The seat construction 20 and the backrest 30 support the upper body parts of the patient. The wheelchair 10 stands and can be moved by means of the right wheel 44 and the left wheel 45 having left and right tyres 46 in conjunction with a right bracing wheel 40 and a left bracing wheel 41. In order to enable that the wheelchair 10 can be turned the right bracing wheel 40 and the left bracing wheel 41 are provided. The wheelchair 10 can be moved by turning the right wheel 44 and the left wheel 45 or by help of a health care person (nurse, physician, etc) or a relative which person by means of the right handle 42 and left handle 43 can push, pull and/or turn the wheelchair 10.

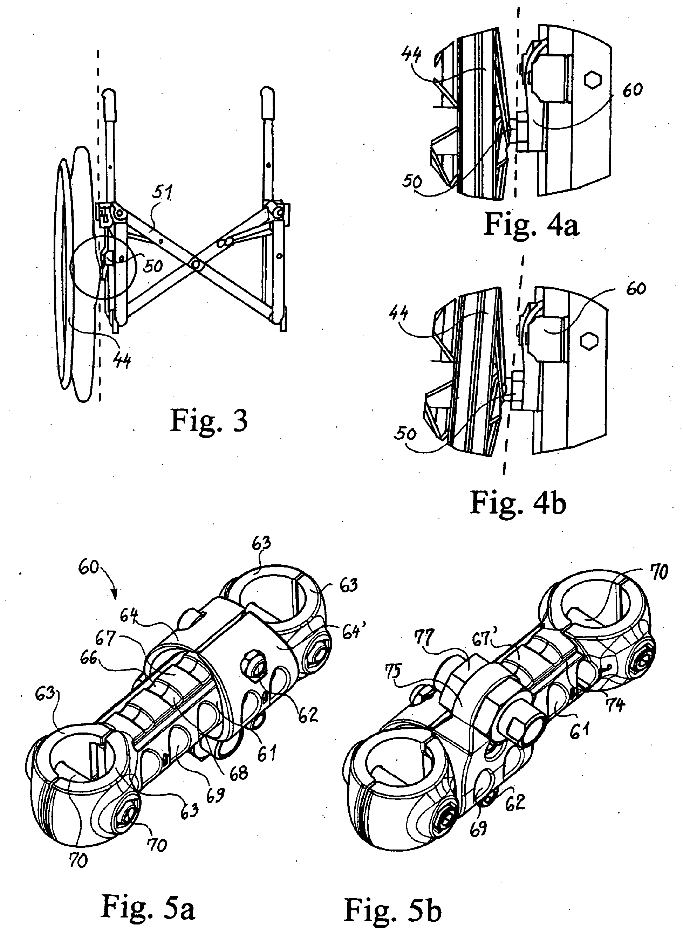

The wheelchair is provided with a set of brackets 60 - one per wheel 44 and 45 - into and from which brackets corresponding two wheel shafts 50 (see figure 4a and 4b) extend.

The height of the right bracing wheel 40 and the left bracing wheel 41 in conjunction with the right wheel 44 and the left wheel 45 determines the overall horizontal inclination of the wheelchair.

Fig. 2 is a side view of the wheelchair's frame components. In order to obtain a rigid and stable construction, the wheelchair 10 basically comprises a frame made of support tubes, i.e. vertical support tubes 11, 12, 13, 14 and two horizontal support tubes, i.e. a lower support tube 16 and an upper pair of support tubes 18. The seat construction 20 rests on the upper pair of support tubes 18. Moreover, the vertical support tubes 11, 12, 13 and 14 each is provided with at least two transverse holes 19; in the figure five through-going holes are shown. These holes, i.e. a set of two holes 19 in each of the support tubes 11 and 12 are used to mount and fixate the right and left wheels by means of two corresponding wheel brackets denoted 60 in the figures to follow. In each of the wheel brackets a wheel shaft, denoted 50 in the figures to follow, is mounted around which the wheel can rotate. As can be seen in the figure, the height of the seat 20 over the surface onto which the wheelchair is positioned, can be adjusted, e.g. if another higher located set of holes 19 in the support tubes 11 and 12 are used, the height of the seat 20 over the surface is relatively lowered, and conversely, in case another relatively lower located set of holes 19 in the support tubes 11 and 12 are used, the height of the seat 20 over the surface is relatively raised. In order to obtain the highest obtainable position of the seat 20 over the surface on which the wheelchair stands, the lowest located set of holes 19 in the support tubes 11 and 12 are to be applied for the mounting of the wheel bracket.

Conversely, to obtain the lowest possible position of the seat 20 over the surface, the highest located set of holes 19 in the support tubes 11 and 12 are to be applied as the two mounting holes for the wheel bracket.

In each of the two mounting holes of the wheel bracket a bolt, a pin, a locking pin or a split pin - denoted 70 in the figures to follow - is applied to securely fixate the wheel bracket to the two substantially parallel support tubes 11 and 12. This principle of course also applies when the wheel bracket for the other wheel is mounted on the opposite side of the wheelchair in the same height over the surface, i.e. the wheel bracket for this second wheel is mounted in the same height onto the pair of corresponding support tubes as the height of the wheel bracket for the first wheel.

Moreover, the wheelchair has an additional frame component, i.e. a set of tubes 17 - where only one is shown - onto which set the backrest 30 is mounted.

Fig. 3 is a view of a part of the wheelchair frame with a wheel. As discussed to obtain a rigid and stable construction, the wheelchair comprises a frame made of support tubes, i.e. the vertical support tubes and horizontal support tubes. In order to further stabilise the wheelchair construction the wheelchair also is constituted by a scissors-like frame or linkage system 51. Moreover, by means of the the scissors-like frame or linkage system 51, the wheelchair can be compacted for transportation or stock purposes, i.e. the wheelchair can be folded up whereby the wheelchair takes up a minimised space.

Fig. 4a shows the wheel of the wheelchair positioned perpendicular to a surface. By means a wheel bracket 60 - discussed in details in figure 5a and 5b - the wheels of the wheelchair can be mounted to two corresponding wheel brackets 60 in such a way that the two wheels are positioned parallel to one another and thus also are positioned perpendicular to the surface onto which the wheelchair is located. In this case the wheel shaft 50 is mounted parallel to the surface. That the wheel shaft being parallel to the surface and thus accordingly the wheel being perpendicular to the plane or surface (e.g. a floor or the soil) is i.e. the result of the way the wheel bracket 60 and its subparts are mounted onto the support tubes, e.g. to tubes 11 and 12 as can be seen in figure 2.

Fig. 4b shows the wheel of the wheelchair in a positive camber. By means of the wheel bracket 60 - discussed in details in figure 5a and 5b - the wheels of the wheelchair can be mounted to two corresponding wheel brackets 60 in such a way that the two wheels are positioned in a positive camber, i.e. the two wheels are not parallel to one another. In this case the wheel shaft 50 - extending out from and mounted within the wheel bracket 60 - is mounted a bit slanting relative to the ground and thus deviating from being exactly parallel to the surface. In fact it is the wheel bracket 60 that makes it slanting relatively to the frame, e.g. to vertical tubes 11 and 12, see figure 12. Accordingly, the wheel shafts 50 and thereby the wheels 44 of the wheelchair each will be positioned in a positive camber having an angle 47.

The advantage of a positive camber - as compared to two parallel located wheels - is that the support for the wheels are maximised. This is since the distance between the two points on which the cambered two wheels touches the surface (ground, surface, floor, etc) are greater that the distance between two points on which two parallel standing wheels touch the surface. Moreover, in particular, if the wheelchair is to roll or even to be parked on a sloped surface - in the extreme sloping in the direction of a line connection the two touching points of the two wheels of the wheelchair - the wheelchair can withstand a higher slope of the surface with wheels having a positive camber. Consequently, the wheels having the positive camber of such wheel-chair provide more safety to the individual on most terrain since such a chair - as opposed to a wheelchair with no camber - less likely will tend to tilt when rolled or parked. Accordingly, this wheelchair can be used in most places, including off road applications.

The deviation typically is an angle 47 in the interval from 1 - 10 degrees, preferably 3 -5 degrees. The chosen deviation corresponds exactly to the camber angle 47 of each of the two wheels 44 and 45.

Figs. 5a and 5b show an embodiment of the wheel bracket according to the invention. The subparts of the wheel bracket 60 consists of a wheel bracket body 61 having two pairs of shells 63. Moreover onto and around the wheel bracket 60 a sleeve 64 - also being a subpart of the bracket 60 - can be fixed. The wheel bracket body 61 has a recess 66 with a surface 67, the wheel bracket body in this embodiment 61 has four recesses 66 for corresponding four horizontal adjustment positions of the sleeve 64 along the wheel bracket body 61. Accordingly, the sleeve 64 is longitudinally, horizontally adjustable in four positions along the wheel bracket 60, in particular along the wheel bracket body 61.

Accordingly - since the wheel necessarily "follows" any position of sleeve 64 - the wheels 44 and 45 can be offset horizontally forth and back relative to the wheelchairs frame - i.e. the sleeve 64 can be released, moved along (forth and back) the horizontal direction of the wheel bracket 60 and fixed again to the wheel bracket 60.

Along and resting in a pair of opposite facing recesses 64 - i.e. on top and bottom of the wheel bracket body - a corresponding pair of nuts and bolts 62 are used to fix the sleeve 64 onto the wheel bracket body 61 and thus to the wheel bracket 60.

A bolt, a pin, a locking pin or a split pin 70 is manufactured to fit into a corresponding hole of the least two transverse holes 19 in the vertical support tubes 11, 12, 13 and 14, see figure 2. Hereby, two pairs of the shells 63 are used to fix the wheel bracket 60 with its sleeve 64 to a corresponding pair of vertical support tubes, e.g. the tubes 11 and 12 as shown on figure 2. This principle applies for the mounting of both wheels 44 and 45 onto the wheelchair 10.

On the sleeve 64 a bracket 75 for the wheel shaft 50 (see figure 4a and 4b) is provided. This bracket 75 has a nut 77 for fixing and fastening the wheel shaft 50 to the wheel bracket 60. For this reason this bracket 75 has a hole for the reception of the end of the wheel shaft 50.

The wheel shaft 50 is e.g. a threaded rod.

The wheel bracket body 61 has an outer parallel defining contact surface 74 opposite an outer slanting defining contact surface 72. As can be seen on figure 5a, the outer parallel defining contact surface 72 has its holes 69 closer to the surface 67 than the outer slanting defining contact surface 74 on figure 5b relative to the surface 67'.

Correspondingly one sleeve part 75 has an inner parallel defining contact surface, whereas the other sleeve part 64' has an inner slanting defining contact surface, these contact surfaces being opposite to one another.

Of course the parallel defining contact surface and the slanting defining contact surface being opposite to one another, both of the wheel bracket body 61, may be switched. The switching of surfaces also applies for corresponding inner contact surfaces of the sleeve 64.

When slanted contact surface parts are mounted, i.e. when the inner slanting defining contact surface 78 of the sleeve part 64 is mounted to the outer slanting defining contact surface 74 of the wheel bracket body 61 the position of wheel shaft 50 - in the hole of the bracket 75 - will in that case result in the wheel having a positioned perpendicular, i.e. exact 90 degrees to the surface on which the wheel chair is located as is illustrated in figure 4a.

When a slanted surface contact part is mounted to a parallel defining contact surface, it will result in the position of wheel shaft 50 having a positive camber as illustrated in figure 4b. Here two cases are possible with the same result, i.e. the wheel gets a positive camber: in the first case, i.e. the slanted outer surface contact part is on the wheel bracket body 61, whereas the parallel defining inner surface contact part is on the sleeve part; in the second case i.e. the slanted inner surface contact part is on sleeve part, whereas the parallel defining outer surface contact part is on the wheel bracket body 61.

If - which is not the case according to the invention - it is desired that the wheel has a negative camber - as opposed to the illustration in figure 4b - the bracket 75 including the sleeve 64 must be rotated 180 around it longitudinal axis prior to mounting on the wheel bracket body 61 of the wheel bracket 60, i.e. the case where the wheel shaft 50 will be positioned closer to the seat 20 as compared to the position of the wheel shaft 50 in figures 1, 3, 4a and 4b.

The purposes of the hole 69 in the bracket body 61 and the corresponding similar shaped holes belonging to the sleeve 64 are to minimise material costs and to obtain a lightweight construction of the wheel bracket 60, e.g. in case each of these parts (the sleeve 64 and the bracket body 61) is cast in ABS or from other metallic or plastic types.

The wheel bracket body 61 has a longitudinal ridge 68 on its surface 67. Correspondingly, the sleeve 64 has a complementary longitudinal ridge on its inner surface adapted to fit with the longitudinal ridge 68 of the outer surface 67 of the wheel bracket body 61. Hereby, when the sleeve 64 is mounted to the wheel bracket body 61 these two co-operating ridges help maintain the mounted position avoiding that the sleeve 64 - when fixed by means of nuts and bolts 62 - moves relatively along and especially not around the bracket body 61.

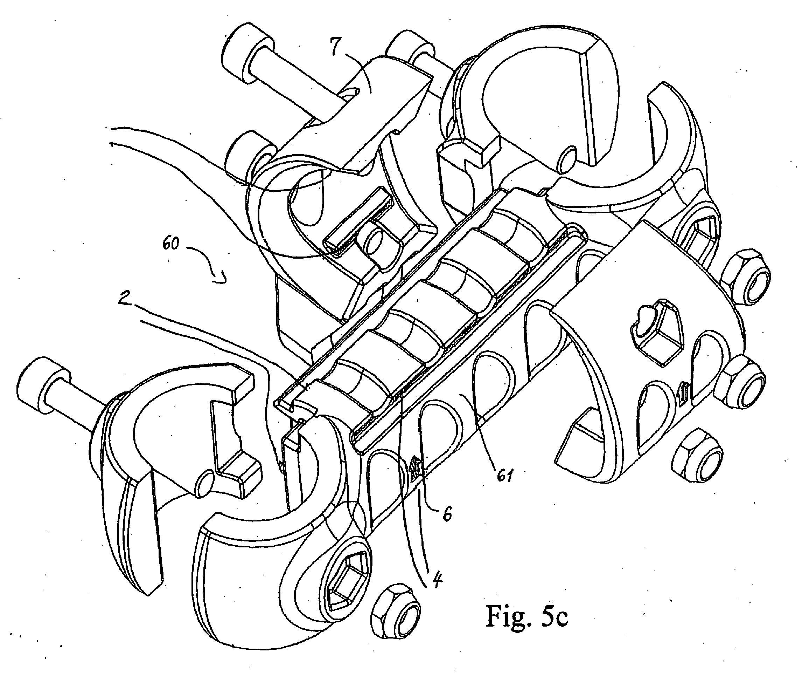

Fig. 5c describes three possible applications of the applicant of the wheel bracket in three positions. In general the wheel shaft 50 can be located over or under relative to the frame part, e.g. the tubing, see e.g. figure 12, on which the wheel bracket 60 is mounted. For example in figure 12 the wheel shaft 50 is located over the frame part.

The first application, i.e. a 0 degrees camber for the wheel being perpendicular to the surface:

The wheel bracket 60 is located with its arrow indication 6 pointing upward. The inner surface 1 of the shell 7 is mounted to the outer surface 2 of the bracket body 61. The shell 7 is mounted facing away from the wheel chair. The wheel shaft 50 can be located over or under relative to the frame part of the wheel chair.

The second application, i.e. a 3 degrees positive camber for the wheel:

The wheel bracket 60 is located with its arrow indication 6 pointing upward. The surface 1 of the shell 7 is mounted to the outer surface 4 of the bracket body 61. The shell 7 is mounted facing away from the wheel chair. The wheel shaft 50 can be located over or under relative to the frame part of the wheel chair.

The third application, i.e. a 3 degrees negative camber for the wheel:

The wheel bracket 60 is located with its arrow indication 6 pointing down. The surface 1 of the shell 7 is mounted to the outer surface 4 of the bracket body 61. The shell 7 is mounted facing away from the wheel chair. The wheel shaft 50 can be located over or under relative to the frame part of the wheel chair.

For the three applications it is moreover possible that the shell 7 instead is mounted facing the wheel chair.

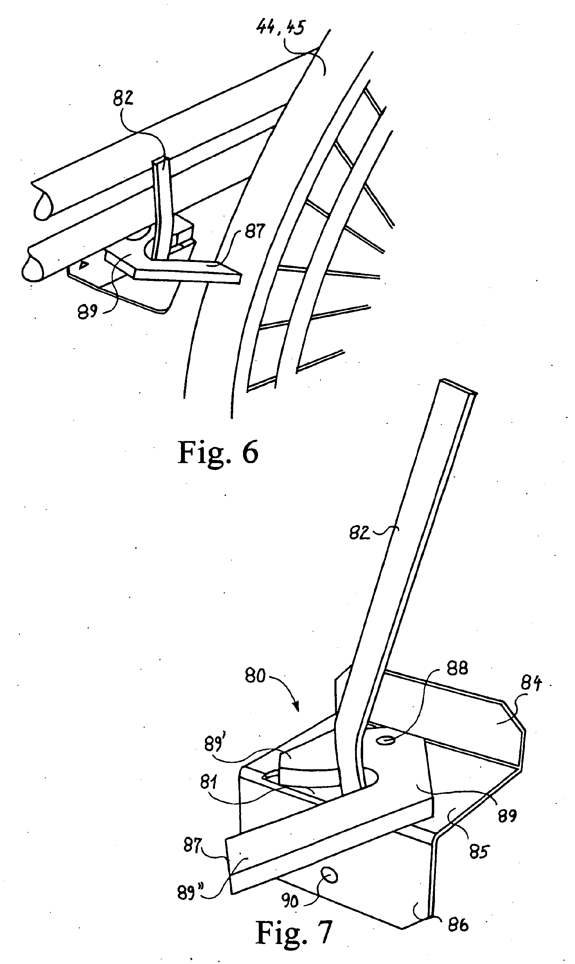

Figs. 6 and 7 show an embodiment of the brake arrangement of the wheelchair. A braking handle 82, e.g. a rod or a tube can be moved between two resting positions:
a braking position and in non-braking position, the latter allows the wheels to rotate if so desired. The braking handle 82 is pivotably journalled relative to a body plate 85 by means of a first pivot joint 90 defining a first pivot axis for allowing the braking handle 82 to pivot between and to be arrested in a first position and a second position corresponding to the two resting positions.

The first pivot joint 90 is constituted of a locking pin or a screw allowing the pivoting.

The braking arrangement - apart from the braking handle rod 82 - is constituted by a braking bracket 80 having an upper leg plate 84, the body part plate 85 and a lower leg plate 86. Onto the body part plate 85 - and parallel with the plane of it - a V-shaped plate or a braking body 89, 89' and 89" is provided. Thus the plate of the braking body 89 has as inner V-shaped recess.

The body part plate 85 has a notch 81 in which the braking handle 82 can be moved to move the braking body 89, 89' and 89" between its two resting positions: the braking position and its free position (i.e. the non-braking position). In the braking position a braking contact surface 87 (on the right half 89" of the V-shaped plate 89) is in contact with the corresponding tyre part of the wheel 46, whereby this wheel - due to the braking force it is subjected to - is forced not to rotate. The braking body 89, 89' and 89" pivots around a pivot centre 88 as a first pivot joint 88 when the handle bar subjects this plate 85 to a force either in the braking direction or in the free non-braking direction. This pivot centre 88 is constituted of a locking pin or a screw allowing the pivot movement, the locking pin or screw connects the braking body 89, 89' and 89" and the body part plate 85.

When the braking handle 82 is moved to the resting non-braking position, i.e. the free position, the braking body 89, 89' and 89" is so manufactured to ensure that the right half 89" (the part having the braking contact surface 87) of the braking body 89, 89' and 89" is located inside the outer contours of the body part plate 85, i.e. the position of the V-shaped plate 89 in this situation is behind the plane of the lower leg plate 86. Hereby it is ensured that a hand, e.g. subjecting the now non-braked wheel to a tangential force, other body limbs or clothes cannot be caught or trapped between the wheel and the braking body 89, 89' and 89" or the body plate 85.

Moreover, due to the construction of the braking body 89, 89' and 89", e.g. as a V-shaped plate, it is also ensured that the left half 89' of this plate always is kept within the outer contours of the body part plate 85 regardless of the position of the braking handle 82. Hereby it is ensured that clothes of the individual very unlikely can be caught by this part 89' of the V-shaped plate.

In other words, the braking body is pivotably journalled relative to the body plate 85 by means of a second pivot joint 88 defining a second pivot axis for allowing the braking body to pivot between a braking and a non-braking position, in which braking position the braking contact surface 87 contacts with a tyre part of the wheel 44, 45 of the wheelchair. The braking handle 82 catches within the V-shaped recess for transforming the pivoting of the handle 82 between the first and second position into pivoting the braking body between the braking and non-braking position, respectively.

In the braking position the braking contact surface 87 extends beyond the outer perimeter of the body plate 85, and, conversely in the non-braking position the braking body 89 being entirely located with the outer perimeter of the body plate 85, whereby no hand, no other body limbs or no clothing can be trapped or caught between the braking body 89 and the wheel 45 or 45.

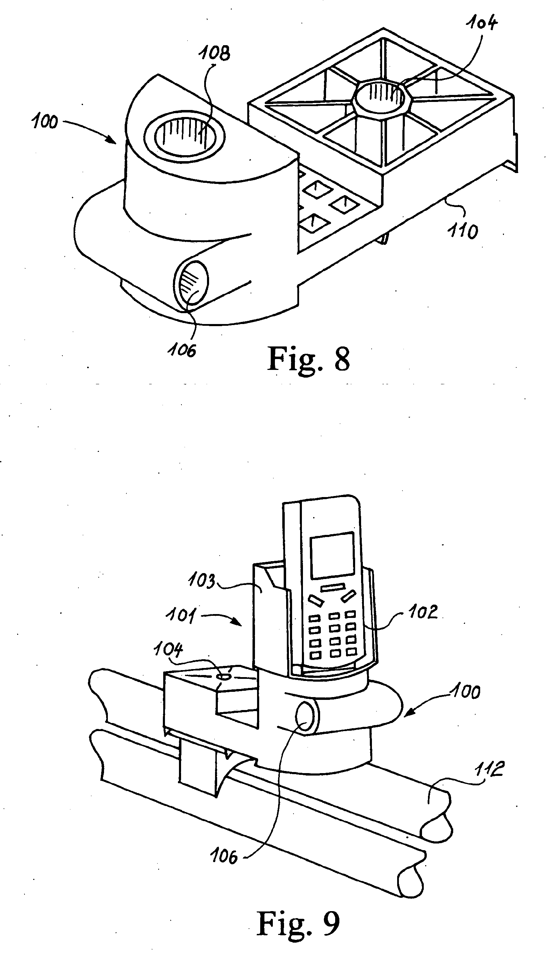

Figs. 8 and 9 show an embodiment of a gadget bracket for the wheelchair. The bracket 100 is a bracket for holding entertainment gadgets 102, e.g. a personal computer (desk or palmtop), an iPod, a GPS receiver, mobile phone, MP3 player, radio with or with out MP3 optionally with the MP3 player in their corresponding holder 103. Often such holder 103 is delivered with the gadget.

The bracket 100 can be mounted by means of a screw or a bolt with a nut to the frame 112 of the wheelchair 10, e.g. to any of the vertical or horizontal support tubes or to an armrest. The hole 104 in the bracket 100 has a dimension of its diameter allowing the screw or bolt to be mounted in and through it to the frame 112 of the wheelchair 10.

The bracket has two transverse holes 106, 108 for the reception of holders 103 having rods or shafts, which can be received in these two holes 106 and 108.

On, onto or into such holders 103, the gadget 102, e.g. the personal computer, the iPod, the GPS receiver, mobile phone, the MP3 player can be placed and/or fixated.

Moreover, the bracket has a recess 110. The recess 110 allows the bracket 100 to receive a part of a supporting surface 112 (e.g. a frame part of the wheelchair).

Alternatively or additionally, the recess 110 allows the user of the wheelchair 10 to lay a cable, a line or a bundle of wires therein, which cable, line and wires thereby can be fixed and strain-relieved in the recess 110 and between the recess 110 and the supporting surface 112.

Fig. 10 is an embodiment of the backrest arrangement of the wheelchair. On the set of tubes 17 - see figure 2, where only one of the set is shown - the backrest 30 is mounted. This mounting takes place by means of a girdle or band 34, which is wound around the tubular support 20.

For example prior to mounting and during mounting it can be advantageous that the two handles 42 and 42 are removed. Onto the backrest 30 a pair of loose or fixed pillows 32 is fixed for the support of the part of the back facing these pillows. These pillows are detachable and can be fixed to the backrest 30 by means of Velcro tape or a snap-lock or by other fixating means achieving the purpose of detachably fixing.

Moreover, the backrest arrangement of the wheelchair is provided with a girdle or band 34 having two purposes: to further fix the backrest 30 onto the set of tubes 17 (see figure 2) and to support the loins also called the small part of the back of the individual using the wheelchair.

The backrest 30 is made of a foldable web. This is necessary in case the wheelchair is to be folded without removing the backrest. This material is a layer of net which e.g. is welded or sewn together and has the advantage that the back of the individual can "breathe" through it, i.e. humidity and warmth from a heated body or sweat easily can escape through the holes in the net and away from it.

Fig. 11 is an embodiment of the seat arrangement of the wheelchair. The seat 20 is made of two foldable web parts, a foldable front web part 21 and a foldable rear web part 26. The rear web part 26 of the seat advantageously exhibits a higher flexibility as compared to that of the front web part 21, such as 5- 50%, e.g. 5- 40 %, such as 5 - 30 %, preferably 5-25 % or 25 - 50 %, or 5-10 %, 10-15%, 15-20%, 20-25%, 25-30%, 30-35%, 35-40%, 40-45% or 45-50% higher flexibility for providing pressure relief under the sitting bones of the individual sitting in the wheelchair.

The foldable front web part 21 and the foldable rear web part 26 may be made from any appropriate material such as polymer or natural fibre web materials including polyester, polypropylene, polyamide, nylon, cotton fibres, wool fibres or similar plant or animal fibres or combinations thereof or the like, and the front web part and the rear web part may be made from identical or different materials, preferably fulfilling the above higher flexibility requirement for the rear web part of the above preferred embodiment.

The web material or each of the web part materials may advantageously be constituted by a layer of a net which net is welded or sewn together and has the advantage that the bottom of the individual can "breathe" through it, i.e. humidity and warmth from a heated body or sweat easily can escape through the holes in the net, away from the net and the body as well.

Onto the seat 20 a pair of loose or fixed pillows 22 and 24 is fixed for the support of the part of the buttocks facing these pillows. These pillows are detachable and can be fixed to the seat 20 by means of Velcro tape or a snap-lock or by other fixating means achieving the purpose of detachably fixing. Moreover, in the seat a pair of casings 28 is provided. This is to be applied to help mounting the seat to the seat supporting structure. On top of each of the upper pair of support tubes 18 another tube 15 (see figure 2) could be mounted in parallel thereto. When the pair of casings 28 is pushed into the pair of tubes 15, the seat material or web is mounted to and between the two tubes 15.

Alternatively, the pair of casings 28 as parts of the seat material is pushed over the pair of tubes 15.

Consequently, in both cases, the seat is suspended between the two tubes 15. Alternatively, the two tubes 18 could replace the two tubes 15 and then these two elongate tubes 18 could be applied solely, i.e. in this case the web is mounted to and between these two tubes 15.

Each of the tubes 15 is mounted, when used in conjunction with their corresponding support tube 18 - as discussed parallel to their corresponding support tube 18.

The mounting - and the distance between tube 15 and the support tube 18 - is made by means of fitting in form of three spacers as depicted in figure 2.

Alternatively, the mounting of tube 15 and the support tube 18 to one another is made by means of fittings in form of three simple rectangular space giving plates.

Alternatively, the tube 15 could be clipped (on) to the support tube 18 by means of a snap lock known in the art for such purpose.

In all cases, the seat 20 with pillows, if any rests on the upper pair of support tubes 18.

The discussed foldable web is made of a perforated material having ventilation openings allowing the behind of an individual using the wheel chair 10 to be warm without heating up the seat 20.

The seat defines opposite front end and rear end edges and opposite side edges.

Also as discussed the seat comprises a pair of casings 28 for allowing the web to receive within the pair of casings a respective side tube of a pair of side tubes 15 or 18 (if 15 is omitted) of the frame of the wheelchair 10.

The pillows 32 are repositionable relative to the web by the front edge thereof and a mirror image of one another. Each of the pillows has an outer covering being water impermeable material, the material is preferably washable.

The pillows can be repositioned by means of co-operating arresting means such as co-operating burr-like fixations, a permanent non-permanent binder or adhesives.

These properties of the pillows 32 also applies to the pillows 22 and 24, which however as indicated are L-shaped.

A mesh of a water-repellent material constitutes the web, which mesh constitutes the one part of the burr-like fixations.

The design of the seat part of the wheelchair has two major differentiating aspects from a functional point of view compared with other wheelchairs:
1) A bending in the horizontal seat tube 15 and/or 20, and
2) Shaped seat combined with elasticity and ventilation.

In particular, the seat 20 support of the wheelchair 10 comprises a set of elongated side tubes 15 or 18 constituting opposite side tubes of the frame of the wheelchair 10. These side tubes serve to mount the seat 20 relative to the wheelchair 10.

Each of these tubes - onto which and between which the material of the seat is suspended - defines a front end and a rear end of the seat 20.

Each of these side tubes is provided with a downward bend that is proximate to the rear end. Whereby the rear part of an individual using the wheelchair's seat 20 is seated low on the rear part 26 as compared to the front part 24 of the seat 20.

The downward bend of the tubes is typically in the interval from 1-8 degrees, most preferably 5 degrees and preferably 2, 3, 4, 6 and 7 degrees.

The downward bend of the tubes located in the interval from 10 - 20 cm from the rear end, most preferably the bend is 13 cm, preferably 11, 15, 17 and 19 cm.

When the human body is sitting down in a chair, as we are a combination of hard bones, skeleton and soft muscles, we need to have different types of support. In addition, when sitting the skeleton partly penetrates through the body and has a thin tissue layer between the seat surface and the skeleton, which applies for the rear part 26 of the seat area. A human being has muscles between the large upper leg bone and the seat and these are supported when sitting in the front part 24 of the seat area. The parts that penetrate through are first of all the tuber ischiadicum, so-called sitting bones. Depending on the pelvis tilt and the support of the sitting bones, sacrum is as well in contact with the seat surface.

In front of the pelvis we have the femur, the upper bone of the leg. This bone is covered by muscles and has little to non-pressure as the muscle tissue takes the load from the body.

For preventing tissue damage in the pelvis region it is important to offer a soft and flexible support that allows weight distribution over as large an area as possible in combination with ventilation. If not, the risk of decubitus increase dramatically. The weight distribution gives less pressure on the most vulnerable parts, tuber ischiadicum and sacrum whereas the ventilation decreases heat and humidity. The higher temperature in combination with normal body perspiration makes the tissue vulnerable and the risk of decubitus increase.

See figure 11 a for the following:

The protruding part of the tuber ischiadicum is as shown here on the left side 7,5 cm. It is an average measurement.

The normal distance between the most rear part of the lower spine, middle of sacrum to the tuber ischiadicum is between 11-15 cm for an adult person.

As the sitting bones are the lowest part when sitting, it is important that they are given space in the vertical line and are offered a large contact area. That would mean that the rear part should be lower.

See figure 11b for the following:

The front of the seat needs on the other hand to be higher as the upper legs are not protruding and is covered with muscles.

Consequences for the design of the seat in a wheelchair, i.e. to allow space for the sitting bones:

On the seat frame, i.e. on the set horizontal tubes 15 or 18, which is applied, there is a bending of 5°, located 13 centimetres from the backrest tube 17, i.e. from the rear end of the seat. The lowest part of the seat tube will be lower.

The rear part of the upholstery is made of an elastic version of a net/ mesh.

For positioning and supporting the upper legs the front part of the seat is in a U-shaped design. It is padded by 1,5 cm foam as well for achieving a higher level, and the front part of the seat is depth adjustable by 5 cm as well dependent of different body propositions of the individual using the wheelchair 10.

For ventilation and weight distribution:
1) The rear part of the seat has a net/ mesh through which air can penetrate,
2) The elasticity in the net/ mesh helps to distribute the body weight evenly as well, and
3) To further stimulate the weight distribution of the body the front part of the seat is higher. This ergonomic shape of the seat creates a full contouring of the basis of the anatomy of the human body.

The material properties discussed above in relation to the seat 20 may be applied for the backrest 30 as well, e.g. the backrest 30 web could be made from the elastic version of the net/ mesh as well.

Figs. 12, 13, 14 and 15 show embodiments of the frame arrangement of the wheelchair. These figures show how the wheel brackets can be fixed to the frame of the wheelchair. Depending on how and in which orientation the wheel bracket 60 is fixated to the frame the wheel shaft 50 - extending out of the bracket 75 being a part of the wheel bracket 60 - is located relatively to the frame accordingly.

As indicated in figure 12 the sleeve 64 on which the bracket 75 (sleeve 64 and bracket 75 both being subparts to the bracket 60) is mounted is oriented so that the wheel shaft 50 is located relatively close to the back of the chair and over the centre of gravity of the wheel bracket body 61 (see figure 5a and 5b).

As shown in figure 13 another frame construction is applied. The bracket 60 is mounted to only one vertical oriented frame part and the bracket is oriented so that the wheel shaft 50 is located relatively close to the back of the chair. As indicated in the figure four bolts with nuts are applied to fix the bracket 60 to the frame part.

As depicted in figure 14, yet another frame construction is applied. In particular, this figure shows the side part of the wheel chair for supporting the drive wheel of the wheel chair.

The side part 120 constitutes two horizontal tubes 121 and 122. These tubes have opposite ends 123 and 124.

Further, the side part of the wheel chair has a vertical distance tube 14"' that interconnects the first 121 and the second 122 elongated tubes. Thus the vertical distance tube 14"' keeps the first 121 and second elongated tubes 122 in vertical, spaced apart and parallel relationship to one another.

As shown, in the preferred the vertical distance tube 14"' interconnects the first(121)and second 122 elongated tubes at their pair of second ends 124.

Moreover, the side part of the wheel chair - to the left side in the figure - has a substantially U-shaped wheel bracket supporting the tubular structure 126 defining two outwardly protruding parallel tubular end parts 127 and 128.

Onto the U-shaped wheel bracket supporting the tubular structure 126 the wheel bracket 60 can be fixated. Accordingly, the shaft 50 of the wheel can be repositioned - following the bracket 60 - along the vertical part of the U-shaped tubular structure 126.

The side part of the wheelchair applies a first and a second set of male and female guiding means: The first set of the male and female guiding means interconnects the first elongated horizontal tube 121 at the first end 123 thereof with one 127 of the outwardly protruding parallel tubular end parts 127 and 128.

The second set of the male and female guiding means is applied to interconnect the second elongated horizontal tube 122 at the first end 123 thereof with another one 128 of the outwardly protruding parallel tubular end parts 127 and 128. These connections allow the substantially U-shaped wheel bracket supporting tubular structure 126 to be shifted horizontally relative to the first 121 and second 122 elongated horizontal tubes.

In order to lock the U-shaped wheel bracket supporting tubular structure relative to the first 121 and second 122 elongated horizontal tubes the side part of the wheel chair has a first 130 and a second arresting means 131. As an example, the arresting means 130 and 131 each is a bolt with a nut, a pin or a locking pin. The bolt or the pin cooperates with a plurality of holes located at the first and second set of male and female guiding means.

These holes allow the locking part 135 and the U-shaped wheel bracket supporting the tubular structure 126 to be positioned, locked and finally arrested in a number of fixed positions. Accordingly, the wheel bracket 60 can be arrested in the number of fixed positions. Consequently, the wheel shaft 50 - and thus the wheel - can be arrested in the number of fixed positions.

Moreover, the wheelchair side part further has a backrest fixture part 17"' part. This backrest fixture part 17"' is connected in case one - as indicated - with the first elongated horizontal tube 121 proximate to the tube end 123.

Alternatively, i.e. case two the backrest fixture part 17"" is connected with the first elongated horizontal tube 121 at the first end of the tube 121.

However, case three, it is also possible to connect the backrest fixture part 17"' part more to the right - as compared to what is indicated - in the figure, i.e. more proximate to the second end 124 of the tube 121.

The backrest fixture part 17"' part has a locking part 135. The locking part is provided in order to be able to reposition and to locking the backrest fixture part 17"' part relative to the horizontal tube 121 as indicated in the three cases above.

The locking part 135 cooperates with the first arresting means 130. Hereby the locking part 135 jointly locks and arrests the U-shaped wheel bracket supporting tubular structure 126 and the locking part 135 relative to the horizontal tube 121.

The shown side part, e.g. as the right side part is mirrored to obtain the other side part (i.e. the left side part) of the wheel chair.

The bracket 60 is mounted to only one vertical oriented frame part and the bracket is oriented so that the wheel shaft 50 is located more away - as compared to the foregoing figure - i.e. more distant in relation to the back part of the wheelchair. As indicated in the figure four bolts optionally with nuts could be applied to fix the bracket 60 to the frame part 126, i.e. the U-shaped wheel bracket supporting tubular structure.

As illustrated in figure 15, yet another frame construction is applied. The bracket 60 is mounted to only one vertical oriented frame part and the bracket is oriented so that the wheel shaft 50 is located closer - as compared to the foregoing figure - i.e. more proximate to the back part of the wheelchair. As indicated in the figure, three bolts optionally with nuts could be applied to fix the bracket 60 to this frame construction.

In general, which applies to figs. 12, 13, 14 and 15 - and figure 1 as well - the bracket 60 is mounted so that it can be fixed to any position along the vertical frame parts shown, accordingly the bracket 60 is repositionable. Accordingly; the height or distance of the wheel shaft 50 (mounted to the sleeve as a part of the bracket 60) - not over the surface, sic - relative to the position of the seat construction 20 and relative to the frame of the wheelchair can be adjusted. In this way the seat height over the surface can be adjusted in an up-going or down-going direction. This is very practical since the height of the seat 20 relatively to the surface can be adjusted to fit the height of the person using the wheelchair, e.g. for a tall person the position of seat 20 could be fixed to be relatively highly located, whereas for a low person or a dwarf the position of seat 20 could be adjusted to be closer to the surface on which the wheelchair is positioned, accordingly for this short person it is easier for him or her to touch the ground (surface) with his or her feet.

In the present specification terms such as up, down, top, bottom, horizontal, vertical, etc, are to be understood unless otherwise indicated referring to the normal orientation or position of the wheel chair resting on a substantially planar and horizontal supporting surface.

## Claims

1. A wheelchair (10) wheel bracket (60) comprising:
a first part (63) to be fixated to the frame of the wheelchair (10), said first part defining a first set of opposite first and second contact surfaces (74), said first part (63) being repositionable relative to said frame for allowing said first contact surface, or alternatively, said second contact surface to face outwardly relatively to said frame defining a fixation surface,
a second part (64) supporting the wheel shaft (50) of one of the wheels (44, 45), said second part defining a second set of opposite third and fourth contact surfaces (78) for allowing said third contact surface, or alternatively, said fourth contact surface to be contacted with and fixated relative to said fixation surface,
at least one of said first and second sets of opposite contact surfaces (74) defining a non parallel set of contact surfaces and at least one combination of contacting one of said surfaces of said second set with one of said surfaces of said first set providing a non cambered position of the wheel, and a different combination of contacting one of said surfaces of said second set with one of said surfaces of said first set providing a positive cambered position of the wheel.

2. The wheelchair (10) wheel bracket (60) according to claim 1, said first part (63) constituting a wheel bracket body (61) having two pairs of shells (63) for mounting the wheel bracket (60) to a pair of support tubes (11, 12), and said second part constituting a sleeve (64) mounted to the wheel bracket body (61), said sleeve (64) having a bracket (75) for mounting and supporting said wheel shaft (50) of a respective wheel (44, 45) of the wheelchair (10).

3. The wheelchair (10) wheel bracket (60) according to claim 2, the wheel bracket body (61) comprising a longitudinal ridge for co-operative engagement with a complementary longitudinal ridge of said sleeve (64).

## Patentansprüche

1. Radkonsole (60) für einen Rollstuhl (10), welche Radkonsole folgendes umfasst:
einen ersten Teil (63) zur Befestigung am Rahmen des Rollstuhls (10), welcher besagte erste Teil einen ersten Satz von einander gegenüberliegenden ersten und zweiten Kontaktflächen (74) definiert, indem der besagte erste Teil (63) im Verhältnis zu dem besagten Rahmen verstellbar ist, sodass die besagte erste Kontaktfläche oder alternativ die besagte zweite Kontaktfläche im Verhältnis zu dem besagten Rahmen nach aussen gewendet werden kann und eine Befestigungsfläche definiert,
einen zweiten Teil (64), der die Radachsel (50) eines der Räder (44,45) stützt, welcher besagte zweite Teil einen zweiten Satz von einander gegenüberliegenden dritten und vierten Kontaktflächen (78) definiert, sodass die besagte dritte Kontaktfläche oder alternativ die besagte vierte Kontaktfläche in Kontakt mit der besagten Befestigungsfläche gebracht und an dieser befestigt werden kann,
indem mindesten eine der besagten ersten und zweiten Sätze von einander gegenüberliegenden Kontaktflächen (74) einen nicht parallelen Satz von Kontaktflächen definiert und mindestens eine Kombination des Kontakts einer der besagten Flächen des besagten zweiten Satzes mit einer der besagten Flächen des besagten ersten Satzes einen Null-Sturz des Rades gewährleistet, und eine andere Kombination des Kontakts einer der besagten Flächen des besagten zweiten Satzes mit einer der besagten Flächen des besagten ersten Satzes einen positiven Sturz des Rades gewährleistet.

2. Die Radkonsole (60) des Rollstuhls (10) gemäss Anspruch 1, wo der besagte erste Teil (63) einen Radkonsolenkörper (61) bildet, der zwei Paar Halbschalen (63) zur Montierung der Radkonsole (60) an einem Paar Stützrohre (11, 12) aufweist, und wo der besagte zweite Teil eine an dem Radkonsolenkörper (61) montierte Muffe (64) bildet, indem die besagte Muffe (64) einen Beschlag (75) zur Montierung und Stützung der besagten Radachsel (50) eines der betreffenden Räder (44, 45) des Rollstuhls (10) aufweist.

3. Die Radkonsole (60) des Rollstuhls (10) gemäss Anspruch 2, wo der Radkonsolenkörper (61) eine längslaufende Rippe zum gegenseitigen Eingriff mit einer komplementären längslaufenden Rippe der besagten Muffe (64) umfasst.

## Revendications

1. Support de roue (60) de fauteuil roulant (10) comprenant :
une première partie (63) à être fixée à la monture du fauteur roulant (10), ladite première partie définissant une premier jeu de premières et deuxièmes surfaces de contact opposées (74), ladite première partie (63) étant repositionnable relatif à ladite première monture pour permettre à ladite première surface de contact, ou alternativement à ladite deuxième contact de surface d'être dirigée vers l'extérieur relatif à ladite cadre définissant une surface de fixation,
une deuxième partie (64) supportant la fusée de roue (50) d'une des roues (44, 45), ladite deuxième partie définissant un deuxième jeu de troisièmes et quatrièmes surfaces de contact opposées (78) afin de permettre à ladite troisième surface de contact, ou alternativement à ladite quatrième contact de surface, d'entrer en contact avec et d'être fixée relatif à ladite surface de fixation,
au moins un des premiers et deuxièmes jeux de surface de contact opposées (74) définissant un jeu non-parallèle de surfaces de contact et au moins une combinaison de contact d'une desdites surfaces du deuxième jeu avec une desdites surfaces dudit premier jeu fournissant une position non-cambrée de la roue, et une combinaison différente de contact d'une desdites surfaces dudit deuxième jeu avec l'une desdites surfaces dudit premier jeu fournissant une position cambrée positive de la roue.

2. Le support de roue (60) de fauteuil rouant (10) selon la revendication 1, ladile première partie (63) constituant un corps de support de roue (61) ayant deux paires d'enveloppes (63) pour monteur le support de roue (60) à un pair de tuyaux de support (11, 12), et ladite deuxième partie constituant un manchon (64) monté au corps de support de roue (61), ledit manchon (64) ayant une fixation (75) pour monter et supporter ladite fusée de roue (50) d'une roue respective (44, 45) du fauteuil roulant (10).

3. Le support de roue (60) de fauteuil rouant (10) selon la revendication 2, le corps de support de roue (61) comprenant un bourrelet longitudinal pour engagement coopératif avec un bourrelet longitudinal complémentaire dudit manchon (64).
